# EUROPÄISCHE PATENTSCHRIFT

(11) **EP 3 880 512 B1**
(45) Veröffentlichungstag und Bekanntmachung des Hinweises auf die Patenterteilung: **21.09.2022**
(21) Anmeldenummer: 19805236.7
(22) Anmeldetag: 14.11.2019
(51) Int. Cl.: B60N 2/56, H04L 12/403, H04L 12/417

(54) **FAHRZEUGSITZ MIT EINER MINDESTENS ZWEI LÜFTER UMFASSENDEN BELÜFTUNGSEINRICHTUNG**
VEHICLE SEAT WITH A VENTILATION DEVICE WHICH COMPRISES AT LEAST TWO FANS
SIÈGE DE VÉHICULE AVEC UN DISPOSITIF DE VENTILATION COMPRENANT AU MOINS DEUX VENTILATEURS

(30) Priorität: 15.11.2018 DE 102018219495
(43) Veröffentlichungstag der Anmeldung: 22.09.2021
(73) Patentinhaber: VOLKSWAGEN AKTIENGESELLSCHAFT, 38440 Wolfsburg (DE)
(72) Erfinder: PFEIFFER, Sascha Alexander, 38440 Wolfsburg (DE)
(86) Internationale Anmeldenummer: PCT/EP2019/081286
(87) Internationale Veröffentlichungsnummer: WO 2020/099539

(56) Entgegenhaltungen:
- EP-A1- 3 182 607
- WO-A1-2004/114513
- WO-A1-2005/101157

## Beschreibung

Die Erfindung betrifft einen Fahrzeugsitz mit einer, mindestens einer Komponente des Fahrzeugsitzes zugeordneten Belüftungseinrichtung, die mindestens zwei Lüfter umfasst.

Der elektrische drehzahlgeregelte Antriebe, insbesondere Antriebe von Lüftern werden in bekannter Weise mittels PWM-Signalen (PWM = Pulsweitenmodulation) oder mittels LIN-Bus (LIN = Local Interconnect Network) angesteuert.

Die Pulsweitenmodulation wird vornehmlich zum Ansteuern von Lasten, wie z.B. Motoren verwendet. Dabei haben Micro-Controller bereits spezielle PWM-Ausgänge integriert. Bei der Pulsweitenmodulation werden Impulse mit voller Spannung aber variabler Breite an die Last gesendet. Ein Rechtecksignal mit konstanter Frequenz wird also mit einem bestimmten Tastverhältnis moduliert. Eine PWM ist also charakterisiert durch ihre Frequenz und ihr Tastverhältnis. Vorteil dieser Ansteuerungsart ist es, dass weniger Leistung verbraucht wird, da nicht permanent eine Eingangsspannung anliegt, die von einer Elektronik auf die gewünschte Motorspannung heruntergeregelt wird, sondern der Motor wird durch die Breite der Schaltimpulse gesteuert.

Aus der Druckschrift DE 20 2015 106 847 U1 ist ein Lüfter, aufweisend ein Lüfterrad und einen Motor zum Antrieb des Lüfterrads bekannt, wobei der Lüfter zwei Versorgungsanschlüsse zur Stromversorgung des Motors und einen Steuereingang zur Ansteuerung des Motors mittels eines Steuersignals aufweist. Zudem weist der der Lüfter eine Statussignalschaltung zur Erzeugung eines Statussignals des Lüfters auf, wobei die Statussignalschaltung zur Modulation des Statussignals auf einen der zwei Versorgungsanschlüsse ausgebildet ist. Der Lüfter weist ferner eine Schaltung aufweist, welche dazu ausgebildet ist, eine Drehzahl des Motors in Abhängigkeit vom Steuersignal einzustellen, wobei die Schaltung ferner zur Verarbeitung von PWM (Pulsweitenmodulation)-Impulsen des Steuersignals oder zur Verarbeitung eines Gleichspannungssignals des Steuersignals ausgebildet ist.

Ein Local Interconnect Network (LIN), auch LIN-Bus genannt, ist ein serielles Kommunikationssystem für die Vernetzung von Sensoren und Aktoren. So wird der LIN-Bus meist im Komfortbereich zur Ansteuerung von Stellmotoren eingesetzt. Die Architektur des Busses erlaubt es, die nötige Bus-Logik einfach in Hardware abzubilden. Viele Mikro-Controller sind somit in der Lage, mit der UART oder SCI-Schnittstelle einen LIN-Bus zu betreiben. Die Kommunikation auf dem LIN-Bus folgt nach dem Master-Slave-Prinzip. Ein Master initiiert die Kommunikation mit einem oder mehreren Slaves, insbesondere mehreren Lüftern oder dergleichen. Die Kommunikation auf dem Bus kann nur stattfinden, wenn ein Master verbunden ist. Dieser veranlasst die eingerichteten Slaves nacheinander Ihre Daten zu senden.

Aus der Druckschrift WO 2004/114513 A1 ist ein Fahrzeugsitz mit einer Belüftungseinrichtung bekannt, der mindestens zwei Lüfter zugeordnet sind. Ergänzend wird auf die Druckschrift WO 2005/101157 A1 verwiesen, die ein Verfahren zur seriellen Übertragung von Informationen zwischen mindestens einem Sender und mindestens einem Empfänger beschreibt, wobei die Übertragung der Informationen mittels Spannungsimpulsen erfolgt.

Anhand der Figuren wird anhand von zwei Ausführungsvarianten der derzeitige Stand der Technik erläutert: Er zeigen:
- Figur 1: eine Anbindung von Lüftern an ein zentrales Steuergerät nach dem Stand der Technik in einer ersten Ausführungsvariante;
- Figur 2: eine Anbindung von Lüftern an ein zentrales Steuergerät nach dem Stand der Technik in einer zweiten Ausführungsvariante.

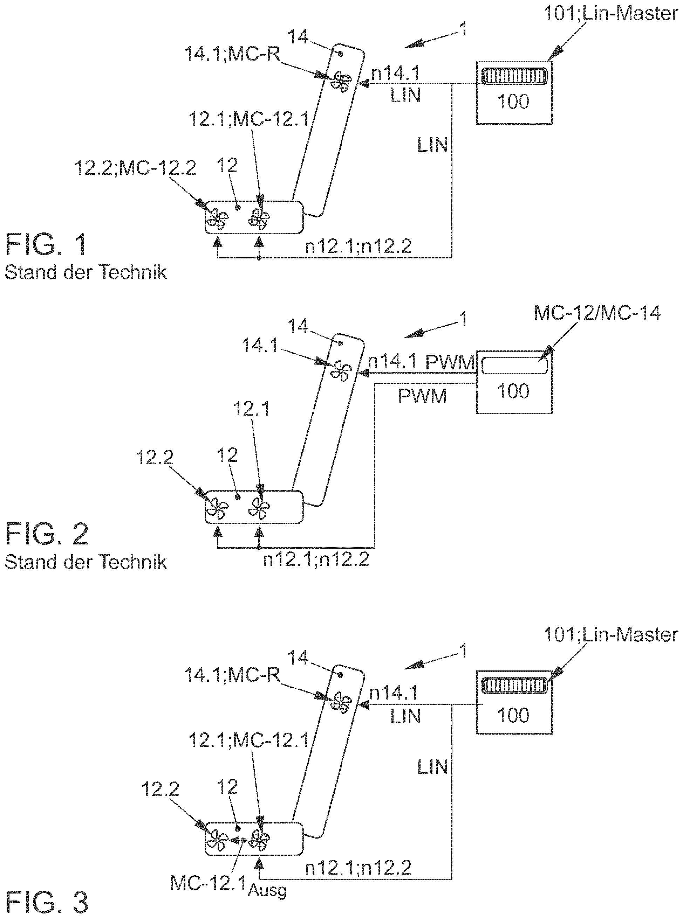

Die Figur 1 zeigt in einer ersten herkömmlichen Ausführungsvariante ein Steuergerät 100 als Teil eines Bordnetzes eines Fahrzeuges und einen ersten 12.1 und einen zweiten Lüfter 12.2 in einem Sitzteil 12 eines Fahrzeugsitzes 1. Der Fahrzeugsitz 1 umfasst ferner eine Rückenlehne 14 mit einem weiteren Lüfter 14.1.

Die Lüfter 12.1, 12.2 und 14.1 werden von dem zentralen Steuergerät 100 über BUS-Signale, insbesondere LIN-Bus-Signale angesteuert, die nach dem Master-Slave-Prinzip an die Lüfter 12.1, 12.2 und 14.1 übermittelt werden. Der LIN-Master 101 ist dem Steuergerät 100 zugeordnet.

Durch Einlesen des masterseitigen Signals in den slaveseitigen Lüftern 12.1, 12.2 und 14.1 zugeordneten jeweiligen LIN-Signals in den Lüftern 12.1, 12.1 wird aus den LIN-Signalen über eine in den Lüftern 12.1, 12.2 angeordnete relativ aufwändige Steuerelektronik MC-12.1, MC-12.2, MC-14.1 einem sogenannten PWM-Controller, insbesondere einem Microchip-Controller jeweils ein pulsweitenmoduliertes Lüfter-Ansteuerungssignal erzeugt, sodass durch die (pulsweitenmodulierten) Lüfter-Ansteuerungssignale die gewünschten Lüfterdrehzahlen n12.1, n12.2 beziehungsweise n14.1 der Lüfter 12.1, 12.2 beziehungsweise 14.1 erzeugt werden können.

Die Lüfter 12.1, 12.2 im Sitzteil 12 können gleiche Drehzahlen n12.1 = n12.2 oder unterschiedliche Drehzahlen n12.1 ≠ n12.2 aufweisen.

Es versteht sich, dass die Drehzahlen der sitzteilseitigen Lüfter n12.1, n12.2 gleich oder unterschiedlich zu der Drehzahl n14.1 des Lüfters 14.1 in der Rückenlehne 14 gesteuert werden können. Es wird insbesondere deutlich, dass jeder der Lüfter 12.1, 12.2 und 14.1 die relativ aufwändige Elektronik MC-12.1, MC-12.2, MC-14.1 und die genannten LIN-Bus-Komponenten 101 benötigt.

Zusammengefasst wird festgestellt, dass die Elektronik zur Erzeugung der PWM-Signale zur Drehzahlregelung der einzelnen Lüfter 12.1, 12.2 und 14.1 in den Lüftern 12.1, 12.2 und 14.1 integriert angeordnet ist.

Die Figur 2 zeigt analog zur Figur 1 in einer zweiten herkömmlichen Ausführungsvariante ein Steuergerät 100 als Teil eines Bordnetzes eines Fahrzeuges und einen ersten 12.1 Lüfter und einen zweiten Lüfter 12.2 in einem Sitzteil 12 eines Fahrzeugsitzes 1. Der Fahrzeugsitz 1 umfasst ferner eine Rückenlehne 14 mit einem weiteren in der Rückenlehne 14 angeordneten Lüfter 14.1.

Die Lüfter 12.1, 12.2 und 14.1 werden in dieser zweiten Ausführungsvariante nicht über BUS-Signale aus dem zentralen Steuergerät 100 angesteuert.

Die sitzteilseitigen Lüfter 12.1, 12.2 und der rückenlehnenseitige Lüfter 14.1 werden über eine PWM-Regelung im Steuergerät 100 angesteuert. Im Steuergerät 100 ist ein Regelbaustein MC-12/MC-14 angeordnet, der bereits PWM-Ausgangsignale für die gewünschte Drehzahl n14.1 des Lüfters 14.1 in der Rückenlehne 14 und ein PWM-Ausgangsignal für die gewünschte Drehzahl n12.1, n12.2 der Lüfter 12.1, 12.2 in der im Sitzteil 12 erzeugt. Es versteht sich, dass die Drehzahl n12.1, n12.2 der sitzteilseitigen Lüfter 12.1 und 12.2 gleich (n12.1, n12.2 = n14.1) oder unterschiedlich (n12.1, n12.2 ≠ n14.1) zu der Drehzahl n14.1 des Lüfters 14.1 in der Rückenlehne 14 sein kann. Dadurch, dass für die sitzteilseitigen Lüfter nur ein PWM-Ausgangsignal und über einen in Figur 2 gezeigten Knoten für die Lüfter 12.1 und 12.2 parallelverschaltet ausgegeben wird, werden die sitzteilseitigen Lüfter 12.1 und 12.2 mit dem gleichen PWM-Ausgangsignal versorgt und die sitzteilseitigen Lüfter 12.1 und 12.2 werden (unter der Voraussetzung gleicher Bauart) mit gleicher Drehzahl n12.1 = n12.2 angesteuert.

Es versteht sich, dass für die sitzteilseitigen Lüfter auch mehrere PWM-Ausgangsignale ohne den in Figur 2 gezeigten Knoten erzeugt und an die die Lüfter 12.1 und 12.2 ausgegeben werden können, sodass die sitzteilseitigen Lüfter 12.1 und 12.2 (unter der Voraussetzung gleicher Bauart) mit unterschiedlicher Drehzahl n12.1 ≠n12.2 angesteuert beziehungsweise gefahren werden können.

Zusammengefasst wird festgestellt, dass die Elektronik zur Erzeugung der PWM-Signale zur Drehzahlregelung der einzelnen Lüfter 12.1, 12.2 und 14.1 in dieser zweiten Ausführungsvariante nicht in den Lüftern 12.1, 12.2 und 14.1, sondern als Regelbaustein MC-12/MC-14 in dem Steuergerät 100 angeordnet ist.

Bei dieser Ausführungsvariante wird jedoch das zentrale Steuergerät 100, welches den Baustein MC-12/MC-14 für die PWM-Regelung im Steuergerät 100 aufweist, kostenseitig gegenüber der in Figur 1 gezeigten und beschriebenen ersten Ausführungsvariante übertreffen, sodass keine Einsparung erreichbar ist. Da serienmäßige Steuergeräte 100 diesen Baustein für die PWM-Regelung auch dann aufweisen, wenn das Fahrzeug gegebenenfalls keine Lüfter im Fahrzeugsitz 1 aufweist, verstärkt sich dieser Kosteneffekt in nachteiliger Weise. Da mit einer vergleichsweise geringen Einbaurate von Fahrzeugsitzen mit mehr als einem Lüfter je Sitzteil 12 und/oder Rückenlehne 14, mithin mit zwei Lüftern 12.1, 12.2 im Sitzteil und/oder in der Rückenlehne 14 zu rechnen ist, erscheint diese Lösung ebenfalls als nicht optimal.

Der Erfindung liegt nun die Aufgabe zugrunde, eine kostengünstige Anbindung von Lüftern an ein Steuergerät zu schaffen, die eine einfache Ansteuerung mehrerer Lüfter erlaubt. Mit anderen Worten es sollen mehrere Lüfter - regelbar - möglichst kostengünstig an ein Steuergerät angebunden werden.

Ausgangspunkt der Erfindung ist ein Fahrzeugsitz mit einer Belüftungseinrichtung, der mindestens zwei Lüfter zugeordnet sind.

Erfindungsgemäß ist vorgesehen, dass ausschließlich einem der mindestens zwei Lüfter als Eingangssignal ein Bus-Signal zur Verfügung gestellt wird, welches in einem Signalwandler zu einem PWM-Signal für den mindestens einen weiteren Lüfter umgewandelt wird, wobei der Signalwandler mindestens einen Ausgang aufweist, der das für den mindestens einen Lüfter erzeugte PWM-Signal einem Eingang des mindestens einen weiteren Lüfter zur Verfügung stellt.

Bevorzugt ist vorgesehen, dass das Bus-Signal ein LIN-Bus-Signal ist, welches von einem Bus-Master in einem Steuergerät gebildet, welches ausschließlich einem Eingang eines Signalwandlers des als Slave ausgebildeten einen Lüfters als Eingangssignal zur Verfügung gestellt wird.

Bevorzugt ist ferner vorgesehen, dass die mindestens eine Komponente ein Sitzteil oder eine Rückenlehne ist, wobei die mindestens zwei Lüfter a) gemeinsam im Sitzteil oder b) gemeinsam in der Rückenlehne oder c) ein Lüfter im Sitzteil und der weitere mindestens eine Lüfter getrennt von dem Sitzteil in der Rückenlehne angeordnet sind.

Bevorzugt wird ein Fahrzeugsitz ausgebildet, bei dem die Komponente das Sitzteil ist, wobei
- einer (erster Lüfter) der mindestens zwei Lüfter in einem Sitzkissen des Sitzteiles und
- der weitere Lüfter (zweiter Lüfter) in einem sitztiefenverstellbaren Sitzkissen des Sitzteiles des Fahrzeugsitzes angeordnet ist, sodass
- ein Fahrzeugsitz mit einer Belüftungseinrichtung im Sitzteil ausgebildet ist,
- wobei ausschließlich einem der mindestens zwei Lüfter als Eingangssignal ein Bus-Signal zur Verfügung gestellt wird, welches
- in dem Signalwandler zu einem PWM-Signal für den mindestens einen Lüfter umgewandelt wird, wobei
- der Signalwandler den mindestens einen Ausgang aufweist, der das für den mindestens einen Lüfter erzeugte PWM-Signal einem Eingang des mindestens einen weiteren Lüfters zur Verfügung stellt.

Die Erfindung wird anhand der Figur 3 näher erläutert:
- Figur 3: eine Anbindung von Lüftern an ein zentrales Steuergerät in einer Ausführungsform gemäß der Erfindung.

Figur 3 zeigt die erfindungsgemäße Ausführung zur Anbindung von fahrzeugsitzseitigen Lüftern 12.1, 12.2 und 14.1 an ein zentrales Steuergerät 100.

Die Erfindung geht im Wesentlichen von der ersten herkömmlichen Ausführungsvariante aus.

Es ist wiederum das Steuergerät 100 als Teil eines Bordnetzes eines Fahrzeuges und ein erster 12.1 und ein zweiter Lüfter 12.2 in einem Sitzteil 12 eines Fahrzeugsitzes 1 angeordnet. Der Fahrzeugsitz 1 weist wiederum eine Rückenlehne 14 mit einem weiteren Lüfter 14.1 auf.

Die Lüfter 12.1, 12.2 und 14.1 werden erfindungsgemäß von dem zentralen Steuergerät 100 über BUS-Signale, insbesondere LIN-Bus-Signale angesteuert, die nach dem Master-Slave-Prinzip an die Lüfter 12.1, 12.2 und 14.1 übermittelt werden. Der LIN-Master 101 ist dem Steuergerät 100 zugeordnet. Das hat den Vorteil, dass die Entfernungen zu den Lüftern 12.1, 12.2 und 14.1 stets durch ein störungsunempfindliches Bus-Kabel realisiert werden können. Die digitalen LIN-Bus-Signale sind in vorteilhafter Weise störungsunempfindlich, wobei das LIN-Bus-Kabel zudem weniger Störungen als ein langes Kabel erzeugt, welches PWM-Signale überträgt. Lange Leitungen über die gemäß der zweiten Ausführungsvariante PWM-Signale übermittelt werden, sollten eher vermieden werden, weil von ihnen elektromagnetische Strahlung ausgeht, die andere Elektronikbauteile, insbesondere solche, die mit Antennen- und Verstärkertechnik arbeiten, gestört werden können.

Insbesondere für den Fall, dass mehr als ein Lüfter in einer Komponente 12 und/oder 14 des Fahrzeugsitzes angeordnet ist, wird vorgeschlagen, nur noch einen der mindestens zwei Lüfter 12.1, 12.2 mit einem slaveseitigen LIN-Bus-Signal aus dem LIN-Master 101 des Steuergerätes 100 zu versorgen. Mithin wird nur ein Bus-Kabel zwischen Steuergerät 100 und der jeweiligen Komponente 12, 14 benötigt und verlegt, wodurch auch Materialkosten gespart werden.

Zudem wird erfindungsgemäß davon ausgegangen, dass die im Ausführungsbeispiel mindestens zwei Lüfter 12.1, 12.2 im Sitzteil 12 mit dem gleichen PWM-Signal n12.1 = n12.2 angesteuert und betrieben werden können.

Mit anderen Worten, es wurde erkannt, dass es unter dieser Voraussetzung keiner getrennten Auswertung von eingangsseitigen LIN-Bus-Signalen in beiden Lüftern 12.1, 12. bedarf und es wurde erkannt, dass es ausreicht ein einziges PWM-Signal in einem einzigen PWM-Controller MC-12.1 zu erzeugen ohne das Einschränkungen hinsichtlich der gewünschten Funktionalität des Belüftungssystems die Folge sind.

Somit wird im Unterschied zu der ersten Ausführungsvariante nur einem der beiden Lüfter 12.1 oder 12.2 ein PWM-Microchip-Controller MC-12.1 oder MC-12.2 zugeordnet, der ein einziges eingangsseitiges LIN-Bus-Signal für den einen Lüfter 12.1, 12.2 auswertet und in das PWM-Signal des einen Lüfters 12.1 oder 12.2 umsetzt.

Es wurde nämlich erfindungsgemäß festgestellt, dass das Sitzteil 12 beispielsweise einen Lüfter 12.1 für die Belüftung des Schaumes des Sitzkissens des Sitzteiles 12 und einen Lüfter 12.2 für die Belüftung des Schaumes eines weiteren Sitzkissens des Sitzteiles 12, welches einer separaten Sitztiefenverstellung des Sitzteiles 12 zugeordnet ist. Dabei ist vorgesehen, dass die Lüfter 12.1 und 12.2 mit dem gleichen PWM-Signal angesteuert werden.

Daraus ergibt sich jetzt der wesentliche Vorteil, dass durch Einlesen eines Signals in einem der Lüfter 12.1 oder 12.2 die PWM-Ansteuerung als eingangsseitiges Signal für die Drehzahl des Lüfters 12.1 oder 12.2 erzeugt wird, welches von dem jeweiligen PWM-Microchip-Controller MC-12.1 oder MC-12.2 noch zusätzlich als Ausgangssignal zur Verfügung gestellt wird und an den jeweils anderen Lüfter 12.1 oder 12.2 im Ausführungsbeispiel an den Lüfter 12.2 zur Verfügung gestellt, mithin ausgegeben wird. Das heißt, der zweite Lüfter 12.2 benötigt in vorteilhafter Weise keinen eigenen PWM-Microchip-Controller MC-12.2. Da die Lüfter 12.1, 12.2 mit dem gleichen PWM-Signal angesteuert werden (ohne dass beide Lüfter 12.1,12.2 eine eigene, kostenintensive Elektronik besitzen), ergibt sich in vorteilhafter Weise die gewünschte Materialersparnis.

Dabei besteht, obwohl die Lüfter 12.1 und 12.2 mit dem gleichen PWM-Signal angesteuert werden, weiterhin die Möglichkeit, die Luftverteilung des Belüftungssystems in beiden Bereichen des Sitzteiles 12 gleichmäßig oder unterschiedlich zu gestalten. Mit den Bereichen ist der zu belüftende Bereich des Haupt-Sitzkissens des Sitzteiles 12 und der zu belüftende Bereich des sitztiefenverstellbaren Sitzkissens des Sitzteiles 12 gemeint, wobei die Bereiche im Regelfall unterschiedliche Ausströmflächen aufweisen.

Der Fachmann wählt in vorteilhafter Weise unter der Voraussetzung des Vorliegens des gemäß der Erfindung gleichen zur Verfügung gestellten PWM-Signals zwei Lüfter 12.1 und 12.2 aus, die je nach der zu belüftenden Ausströmfläche des Haupt-Sitzkissens des Sitzteiles 12 und des sitztiefenverstellbaren Sitzkissens die gewünschte gleichmäßige oder ungleichmäßige Belüftung bewirkt. Dabei kann der Fachmann dafür sorgen, dass die je nach Bauart des Lüfters 12.1, 12.2 gleiche oder unterschiedliche Luftmengen erzeugt werden. So ist es möglich, dass bei gleicher PWM-Ansteuerung, das heißt bei Anliegen des gleichen PWM-Signals am ersten und am zweiten Lüfter 12.1, 12.2 eine gleichmäßige Luftverteilung garantiert wird, obwohl unterschiedliche Lüfterdrehzahlen vorliegen, die bei entsprechender Lüfterleistung gefahren werden. Mit anderen Worten, erfindungsgemäß ist zwingend somit nur das anliegende PWM-Signal der Lüfter 12.1, 12.2 gleich, weil die Lüfter 12.1, 12.2 1 von gleicher oder unterschiedlicher Bauart seien können.

Ziel ist es zumeist eine gleichmäßige, flächige Luftverteilung in den beiden Sitzkissen des Sitzteiles 12, dem Haupt-Sitzkissen des Sitzteiles 12 und dem sitztiefenverstellbaren Sitzkissen des Sitzteiles 12 zu erzeugen, um bei einer aufsitzenden Person ein einheitliches Komfortgefühl zu bewirken. Im Regelfall wird der zweite Lüfter 12.2 des sitztiefenverstellbaren Sitzkissens des Sitzteiles 12 dann derart ausgewählt, dass der Luftdurchsatz (Luftmenge m³/pro Fläche m²) an den Luftdurchsatz (Luftmenge m³/pro Fläche m²) des Haupt-Sitzkissens des Sitzteiles 12 angepasst ist. Bei einer kleineren Ausströmfläche in m² des sitztiefenverstellbaren Sitzkissens des Sitzteiles 12 wird der zweite Lüfter 12.2 somit derart ausgewählt, dass es bei dem zur Verfügung stehenden Eingangssignal 12.2, welches dem Ausgangssignal MC-12.1_{Ausg} des ersten Lüfters 12.1 entspricht, eine geringere Luftmenge in m³ erzeugt.

### Bezugszeichenliste

- 100: Steuergerät
- 101: LIN-Master
- 12: Sitzteil
- 12.1: erster Lüfter
- MC-12.1: Steuerelektronik
- n12.1: Drehzahl erster Lüfter 12.1
- 12.2: zweiter Lüfter
- MC-12.2: Steuerelektronik
- n12.2: Drehzahl zweiter Lüfter 12.2
- 14: Rückenlehne
- 14.1: erster Lüfter
- MC-14.1: Steuerelektronik
- n14.1: Drehzahl erster Lüfter 14.1
- MC-12/MC-14: PWM-Baustein
- MC-12.1_{Ausg}: Ausgangssignal MC-12.1 (Eingangssignal für 12.2)
- PWM: pulsweitenmoduliertes Signal
- LIN: Bus-Signal

## Patentansprüche

1. Fahrzeugsitz (1) mit einer Belüftungseinrichtung, der mindestens zwei Lüfter (12.1, 12.2) zugeordnet sind, **dadurch gekennzeichnet, dass** ausschließlich einem der mindestens zwei Lüfter (12.1, 12.2) als Eingangssignal ein Bus-Signal (LIN) zur Verfügung gestellt wird, welches in einem Signalwandler (MC12.1, MC12.2) zu einem PWM-Signal (PWM) für den mindestens einen weiteren Lüfter (12.1) umgewandelt wird, wobei der Signalwandler (MC-12.1) mindestens einen Ausgang (MC-12_{Ausg}) aufweist, der das für den mindestens einen Lüfter (12.1) erzeugte PWM-Signal (PWM) einem Eingang des mindestens einen weiteren Lüfter (12.2) zur Verfügung stellt.

2. Fahrzeugsitz nach Anspruch 1, **dadurch gekennzeichnet, dass** das Bus-Signal ein LIN-Bus-Signal (LIN) ist, welches von einem Bus-Master (101) in einem Steuergerät (100) gebildet, welches ausschließlich einem Eingang eines Signalwandlers (MC12.1, MC12.2) des als Slave ausgebildeten einen Lüfters (12.1, 12.2) als Eingangssignal zur Verfügung gestellt wird.

3. Fahrzeugsitz nach Anspruch 1, **dadurch gekennzeichnet, dass** der Fahrzeugsitz mindestens eine Komponente umfasst, wobei die mindestens eine Komponente ein Sitzteil (12) oder eine Rückenlehne (14) ist, wobei die mindestens zwei Lüfter (12.1, 12.2; 14.1) gemeinsam im Sitzteil (12) oder gemeinsam in der Rückenlehne (14) oder ein Lüfter (12.1) im Sitzteil (12) und der weitere mindestens eine Lüfter (14.1) getrennt von dem Sitzteil (12) in der Rückenlehne (14) angeordnet sind.

4. Fahrzeugsitz nach Anspruch 3, **dadurch gekennzeichnet, dass** die Komponente das Sitzteil (12) ist, wobei einer der mindestens zwei Lüfter (12.1, 12.2) in einem Sitzkissen des Sitzteiles (12) und der weitere Lüfter (12.2) in einem sitztiefenverstellbaren Sitzkissen des Sitzteiles (12) des Fahrzeugsitzes (1) angeordnet sind, sodass ein Fahrzeugsitz (1) mit einer Belüftungseinrichtung im Sitzteil (12) ausgebildet ist, wobei ausschließlich einem der mindestens zwei Lüfter (12.1, 12.2) als Eingangssignal ein Bus-Signal (LIN) zur Verfügung gestellt wird, welches in dem Signalwandler (MC12.1, MC12.2) zu einem PWM-Signal (PWM) für den mindestens einen Lüfter (12.1) umgewandelt wird, wobei der Signalwandler (MC-12.1) den mindestens einen Ausgang (MC-12_{Ausg}) aufweist, der das für den mindestens einen Lüfter (12.1) erzeugte PWM-Signal (PWM) einem Eingang des mindestens einen weiteren Lüfters (12.2) zur Verfügung stellt.

## Claims

1. Vehicle seat (1) having a ventilation device which is assigned at least two fans (12.1, 12.2), **characterized in that** only one of the at least two fans (12.1, 12.2) is provided, as an input signal, with a bus signal (LIN) which is converted, in a signal converter (MC12.1, MC12.2) to form a PWM signal (PWM) for the at least one further fan (12.1), wherein the signal converter (MC-12.1) has at least one output (MC-12_{Ausg}) which provides an input of the at least one further fan (12.2) with the PWM signal (PWM) generated for the at least one fan (12.1).

2. Vehicle seat according to Claim 1, **characterized in that** the bus signal is a LIN bus signal (LIN) which is formed by a bus master (101) in a control unit (100) and is made available, as an input signal, only to an input of a signal converter (MC12.1, MC12.2) of the one fan (12.1, 12.2) in the form of a slave.

3. Vehicle seat according to Claim 1, **characterized in that** the vehicle seat comprises at least one component, wherein the at least one component is a sitting part (12) or a backrest (14), wherein the at least two fans (12.1, 12.2; 14.1) are arranged together in the sitting part (12) or are arranged together in the backrest (14) or one fan (12.1) is arranged in the sitting part (12) and the further at least one fan (14.1) is arranged separately from the sitting part (12) in the backrest (14).

4. Vehicle seat according to Claim 3, **characterized in that** the component is the sitting part (12), wherein one of the at least two fans (12.1, 12.2) is arranged in a seat cushion of the sitting part (12) and the further fan (12.2) is arranged in a seat-depth-adjustable seat cushion of the sitting part (12) of the vehicle seat (1), with the result that a vehicle seat (1) having a ventilation device in the sitting part (12) is formed, wherein only one of the at least two fans (12.1, 12.2) is provided, as an input signal, with a bus signal (LIN) which is converted, in the signal converter (MC12.1, MC12.2) to form a PWM signal (PWM) for the at least one fan (12.1), wherein the signal converter (MC-12.1) has the at least one output (MC-12_{Ausg}) which provides an input of the at least one further fan (12.2) with the PWM signal (PWM) generated for the at least one fan (12.1).

## Revendications

1. Siège de véhicule (1), comprenant un dispositif de ventilation auquel sont associés au moins deux ventilateurs (12.1, 12.2),
**caractérisé en ce qu'**un signal de bus (LIN) en tant que signal d'entrée est mis à disposition exclusivement d'un des au moins deux ventilateurs (12.1, 12.2), lequel signal est converti dans un convertisseur de signal (MC12.1, MC12.2) en un signal modulé en largeur d'impulsion (PWM) pour ledit au moins un autre ventilateur (12.1), le convertisseur de signal (MC-12.1) présentant au moins une sortie (MC-12_{Ausg}) qui met le signal PWM (PWM) produit pour ledit au moins un ventilateur (12.1) à la disposition d'une entrée du au moins un autre ventilateur (12.2).

2. Siège de véhicule selon la revendication 1, **caractérisé en ce que** le signal de bus est un signal de bus LIN (LIN) qui est formé par un maître de bus (101) dans un contrôleur (100) et qui est mis à disposition en tant que signal d'entrée exclusivement à une entrée d'un convertisseur de signal (MC12.1, MC12.2) dudit un ventilateur (12.1, 12.2) réalisé sous forme d'esclave.

3. Siège de véhicule selon la revendication 1, **caractérisé en ce que** le siège de véhicule comprend au moins un composant, ledit au moins un composant étant une partie d'assise (12) ou une partie de dossier (14), dans lequel les au moins deux ventilateurs (12.1, 12.2; 14.1) sont disposés ensemble dans la partie d'assise (12) ou ensemble dans la partie de dossier (14), ou un ventilateur (12.1) est disposé dans la partie d'assise (12) et l'autre au moins un ventilateur (14.1) est disposé séparément de la partie d'assise (12) dans la partie de dossier (14).

4. Siège de véhicule selon la revendication 3, **caractérisé en ce que** le composant est la partie d'assise (12), dans lequel l'un des au moins deux ventilateurs (12.1, 12.2) est disposé dans un coussin de la partie d'assise (12) et l'autre ventilateur (12.2) est disposé dans un coussin réglable en profondeur d'assise (12) du siège de véhicule (1) de façon à réaliser un siège de véhicule (1) avec un dispositif de ventilation dans la partie d'assise (12), dans lequel un signal de bus (LIN) en tant que signal d'entrée mis à disposition exclusivement d'un des au moins deux ventilateurs (12.1, 12.2), lequel signal est converti dans le convertisseur de signal (MC12.1, MC12.2) en un signal PWM (PWM) pour ledit au moins un ventilateur (12.1),
le convertisseur de signal (MC-12.1) présentant ladite au moins une sortie (MC-12_{Ausg}) qui met le signal PWM (PWM) produit pour ledit au moins un ventilateur (12.1) à la disposition d'une entrée du au moins un autre ventilateur (12.2).
